# EUROPEAN PATENT SPECIFICATION

(11) **EP 2 418 408 B1**
(45) Date of publication and mention of the grant of the patent: **18.09.2013**
(21) Application number: 10008422.7
(22) Date of filing: 12.08.2010
(51) Int. Cl.: F16K 31/00, G05D 23/02

(54) **Regulation valve**
Regelventil
Soupape de régulation

(43) Date of publication of application: 15.02.2012
(73) Proprietor: Honeywell Technologies Sarl, 1180 Rolle (CH)
(72) Inventor: Klepsa, Martin, 61200 Brno (CZ); Fallmann, Emil, 74850 Schefflenz (DE)
(74) Representative: Sturm, Christoph

(56) References cited:
- WO-A1-2006/076732
- WO-A1-2007/118702
- WO-A1-2010/022566
- US-A1- 2007 075 152
- US-A1- 2007 194 141

## Description

The invention relates to a regulation valve for a liquid, especially to a drinking water regulation valve for a drinking water circulation system.

In drinking water circulation systems it is necessary to provide a defined temperature of the drinking water circulated by the drinking water circulation system. A drinking water regulation valve used in such a drinking water circulation system needs to provide an accurate regulation of the flow rate of the drinking water through the drinking water regulation valve depending on the temperature of the drinking water. Another requirement for such a regulation valve is to provide an easy and reliable shut off function. Similar requirements have to be fulfilled by regulation valves for circulation systems of other liquid mediums.

A regulation valve according to the preamble of claim 1 is known from WO 2006/076732 A1.

Against this background, a novel regulation valve is provided which provides an accurate regulation of the flow rate of the liquid medium through the regulation valve depending on the temperature of the liquid medium.

The present invention provides a regulation valve according to claim 1.

According to the invention, a thermo element acts together with the valve plunger and the first spring element in such a way that at relative low temperatures of the liquid medium the valve plunger is lifted up from the valve seat by the first spring force being larger than the thermo element force thereby providing a relative high flow rate of the liquid medium through the regulation valve, and that at relative high temperatures of the liquid medium the valve plunger is pressed against the valve seat by the thermo element force being larger than the first spring force thereby providing a relative low flow rate of the liquid medium through the regulation valve.

The regulation valve preferably comprises a second spring element acting together with to the valve body, said second spring element providing a second spring force which tends press the valve body against a stroke provided by the said valve housing. When at relative high temperatures of the liquid medium the temperature of the liquid medium is below a disinfection temperature threshold, the thermo element force provided by said thermo element is below the second spring force provided by said second spring element, whereby said valve plunger is pressed against said valve seat and whereby said valve body is pressed against said stroke thereby providing said relative low flow rate of the liquid medium through the regulation valve. However, when at relative high temperatures of the liquid medium the temperature of the liquid medium is above the disinfection temperature threshold, the thermo element force provided by said thermo element is above the second spring force provided by said second spring element, whereby said valve plunger is pressed against said valve seat and whereby said valve body is lifted up from said stroke thereby providing a disinfection flow rate of the liquid medium through the regulation valve being higher than said relative low flow rate.

Preferred developments of the invention are provided by the dependent claims and the description which follows. Exemplary embodiments are explained in more detail on the basis of the drawing, in which:
- Figures 1a to 1f: show a regulation valve according to a first embodiment of the invention;
- Figures 2a and 2b: show an alternative for the detail according to Figure 1 b and 1c:
- Figures 3a and 3b: show another alternative for the detail according to Figure 1b and 1c,
- Figures 4a and 4b: show another alternative for the detail according to Figure 1b and 1c;
- Figures 5a to 5c: show an alternative for the detail according to Figure 1d and 1e;
- Figures 6a to 6d: show another alternative for the detail according to Figure 1d and 1e;
- Figures 7a and 7b: show an alternative for the detail according to Figure 6c and 6d; and
- Figures 8a to 8e: show a regulation valve according to a second embodiment of the invention.

The invention relates to a regulation valve for a liquid medium like water, especially to a drinking water regulation valve for a drinking water circulation system.

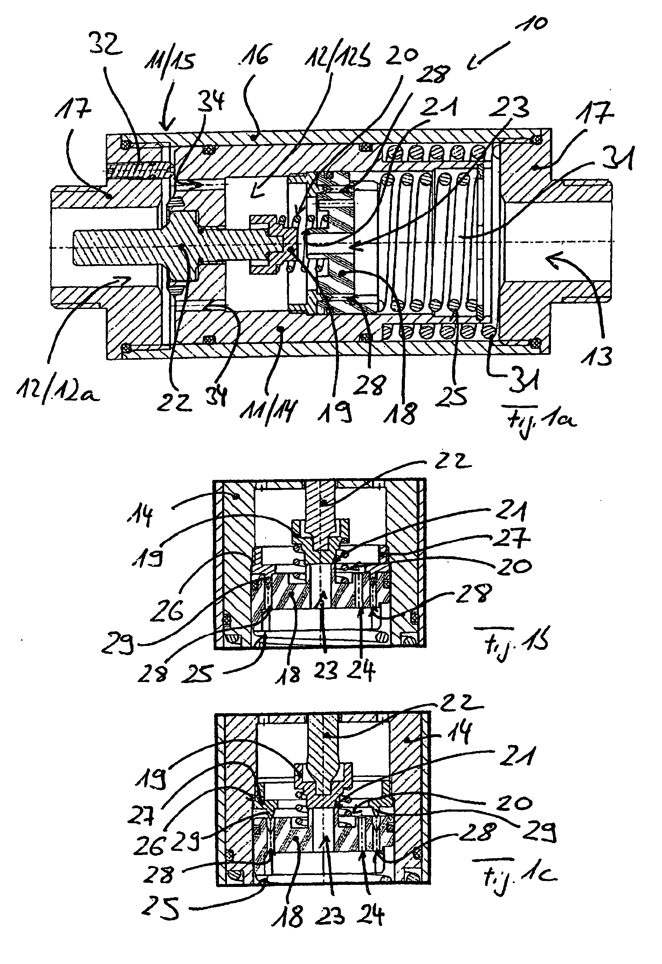

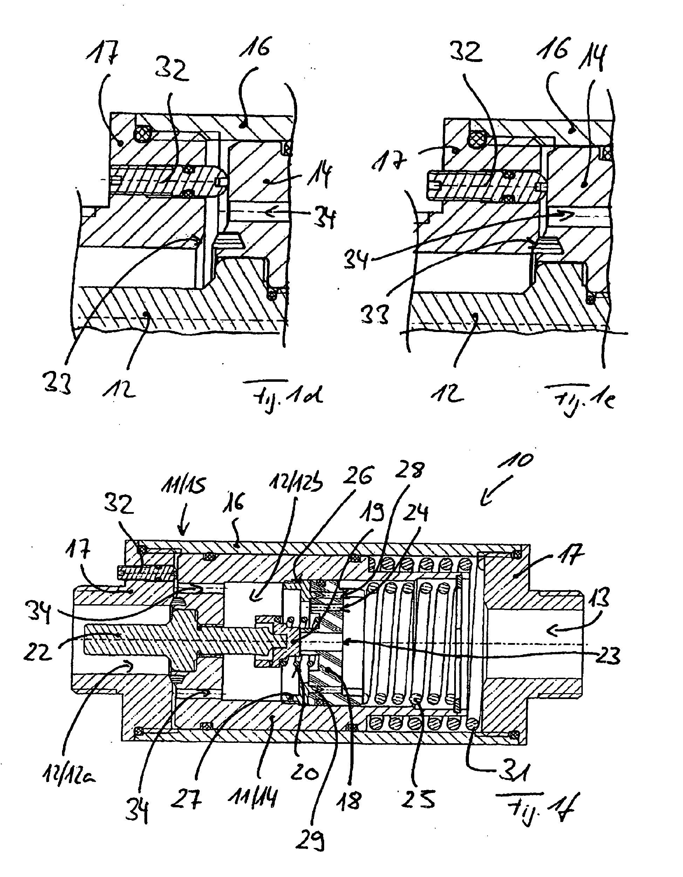

Figures 1a and 1f each show a cross sectional view of a regulation valve 10 according to a first embodiment of the invention, whereby Figure 1b,1 c, 1 d and 1 e show details of said regulation valve 10.

The regulation valve 10 comprises a valve housing 11. The valve housing 11 provides a valve inlet chamber 12 for the liquid medium and a valve outlet chamber 13 for the liquid medium.

The valve housing 11 of the regulation valve 10 of the embodiment of Figures 1a to 1f comprises a moveable part 14 being positioned inside a non moveable part 15 of the valve housing 11. The moveable part 14 of the valve housing 11 is moveable relative to the non moveable part 15 of the valve housing 11.

The non moveable part 15 of the valve housing 11 comprises according to the embodiment of Figures 1a to 1f a tube portion 16 and plug portions 17 being inserted into opposite ends of the tube portion 16.

The moveable part 14 of the valve housing 11 is provided by a tube, whereby an end section of the moveable part 14 separates the valve inlet chamber 12 into two sub-chambers, namely into a first inlet sub-chamber 12a and a second inlet sub-chamber 12b.

The regulation valve 10 further comprises a valve insert being positioned within said valve housing 11, namely in the embodiment of Figures 1a to 1f within the moveable part 14 of the valve housing 11. Said valve insert comprising a valve body 18, a valve plunger 19 and a first spring element 20 being positioned between the valve body 18 and the valve plunger 19 and acting on the valve body 18 and the valve plunger 19.

Said valve body 18 separates the second inlet sub-chamber 12b from the outlet chamber 13 and provides a valve seat 21 for said valve plunger 19. Said first spring element 20 provides a first spring force which tends to lift up said valve plunger 19 from said valve seat 21.

The regulation valve 10 further comprises a thermo element 22 being positioned directly in the flow of the liquid medium, namely in the embodiment of Figure 1 directly within the valve inlet chamber 12 of the regulation valve 10.

Said thermo element 22 provides a thermo element force depending on the temperature of the liquid medium within the valve housing 11, namely in the embodiment of Figure 1 within the valve inlet chamber 12. Said thermo element 22 is acting on the valve plunger 19. Said thermo element force provided by said thermo element 22 is acting against the first spring force provided by said first spring element 20 and thereby tends to press said valve plunger 19 against said valve 21.

Said thermo element force provided by said thermo element 22 increases when the temperature of the liquid medium within the valve housing 11, namely in the embodiment of Figure 1 within the valve inlet chamber 12, increases.

Said thermo element 22 acts together with the valve plunger 19 and the first spring element 20 in such a way that at relative low temperatures of the liquid medium within the valve housing 11 the valve plunger 19 is lifted up from the valve seat 21 by the first spring force being larger than the thermo element force thereby providing a relative high flow rate of the liquid medium through the regulation valve 10. At relative high temperatures of the liquid medium within the valve housing 11 the valve plunger 19 is pressed against the valve seat 21 by the thermo element force being larger than the first spring force thereby providing a relative low flow rate of the liquid medium through the regulation valve 10.

Said valve body 10 provides at least one relative large opening 23 which is opened when said valve plunger 19 is lifted up from said valve seat 21 at relative low temperatures of the liquid medium thereby providing the relative high flow rate. The or each relative large opening 23 is at least partially closed when said valve plunger 19 is pressed against said valve seat 21 at relative high temperatures of the liquid medium thereby providing the relative low flow rate.

In the embodiment of Figures 1 a to 1f, the or each relative large opening 23 of the valve body 18 is completely closed when said valve plunger 19 is pressed against said valve seat 21, whereby the relative low flow rate through the control rate is provided by at least one additional, relative small opening 24 within the valve body 18.

The regulation valve 10 further comprises a second spring element 25 acting together with to the valve body 18. Said second spring element 25 provides a second spring force which tends press the valve body 18 in the direction of a stroke 26 provided by the said valve housing 11. In the embodiment of Figures 1a to 1f, said stroke 26 is provided by the moveable part 14 of the valve housing 11.

A barrier element 27 is positioned between the stroke 26 and the valve body 18. When the valve plunger 19 is pressed against the valve seat 21 provided by said valve body 18, the thermo element force provided by said thermo element 22 is also acting against the second spring force provided by said second spring element 25 and thereby tends to lift up the valve body 18 from said stroke 26, namely in the embodiment of Figures 1a to 1f from the barrier element 27 being positioned between the stroke 26 and the valve body 18.

When at relative high temperatures of the liquid medium the temperature of the liquid medium is below a disinfection temperature threshold, the thermo element force provided by said thermo element 22 is below the second spring force provided by said second spring element 25. In this case said valve plunger 19 is pressed against said valve seat 21 and that said valve body 18 is pressed against said stroke 26, namely in the embodiment of Figures 1a to 1f against the barrier element 27, thereby providing said relative low flow rate of the liquid medium through the regulation valve.

When at relative high temperatures of the liquid medium the temperature of the liquid medium is above the disinfection temperature threshold, the thermo element force provided by said thermo element 22 is above the second spring force provided by said second spring element 25 so that said valve plunger 19 is pressed against said valve seat 21 and that said valve body 18 is lifted up from said stroke 26, namely in the embodiment of Figures 1a to 1f from the barrier element 27, thereby providing a disinfection flow rate of the liquid medium through the regulation valve being higher than said relative low flow rate.

Said disinfection flow rate of the liquid medium through the regulation valve 10 is higher than said relative low flow rate through the regulation valve 10. Said disinfection flow rate of the liquid medium through the regulation valve 10 can be higher or lower than said relative high flow rate through the regulation valve 10.

In order to provide said disinfection flow rate, said valve body 18 alone or the valve body 18 in combination with the valve housing 11 provides at least one disinfection opening 28 which is closed when at relative high temperatures of the liquid medium the temperature of the liquid medium is below the disinfection temperature threshold and which is opened when at relative high temperatures of the liquid medium the temperature of the liquid medium is above the disinfection temperature threshold.

In the embodiment of Figures 1a to 1f, the or each disinfection opening 28 is provided by said valve body 18 alone. The or each disinfection opening 28 is closed (see Figure 1b) by a respective pin 29 provided by said barrier element 27 when the temperature of the liquid medium is below the disinfection temperature threshold.

The or each disinfection opening 28 is opened (see Figure 1c) by the respective pin 29 when the temperature of the liquid medium is above the disinfection temperature threshold. The barrier element 27 is fixed within the moveable part 14 of the valve housing 11.

At relative low temperatures of the liquid medium, the regulation valve 10 of Figures 1 a to 1f provides a relative high flow rate of the liquid medium through the regulation valve 10, namely through the or each relative large opening 23 of the valve body 18.

At relative high temperatures of the liquid medium below the disinfection temperature threshold, the regulation valve 10 of Figures 1 a to 1f provides a relative low flow rate of the liquid medium through the regulation valve 10, namely through the or each relative small opening 24 of the valve body 18, whereby the or each relative large opening 23 of the valve body 18 is closed at relative high temperatures of the liquid medium.

At relative high temperatures of the liquid medium above the disinfection temperature threshold, the regulation valve 10 of Figures 1a to 1f provides a disinfection flow rate of the liquid medium through the regulation valve 10, namely through the or each disinfection opening 28 of the valve body 18, whereby the or each relative large opening 23 of the valve body 18 is closed at relative high temperatures of the liquid medium. Said disinfection flow rate of the liquid medium through the regulation valve 10 is at least higher than said relative low flow rate through the regulation valve 10. Said disinfection flow rate of the liquid medium through the regulation valve 10 can also be higher than said relative high flow rate through the regulation valve 10, depending on the size of the or each disinfection opening 28.

The thermo element 22 is positioned directly in the flow of the liquid medium. This allows a quick and accurate reaction on a changing temperature of the liquid medium and therefore an accurate regulation of the flow rate of the liquid medium through the regulation valve 10 depending on the temperature of the liquid medium.

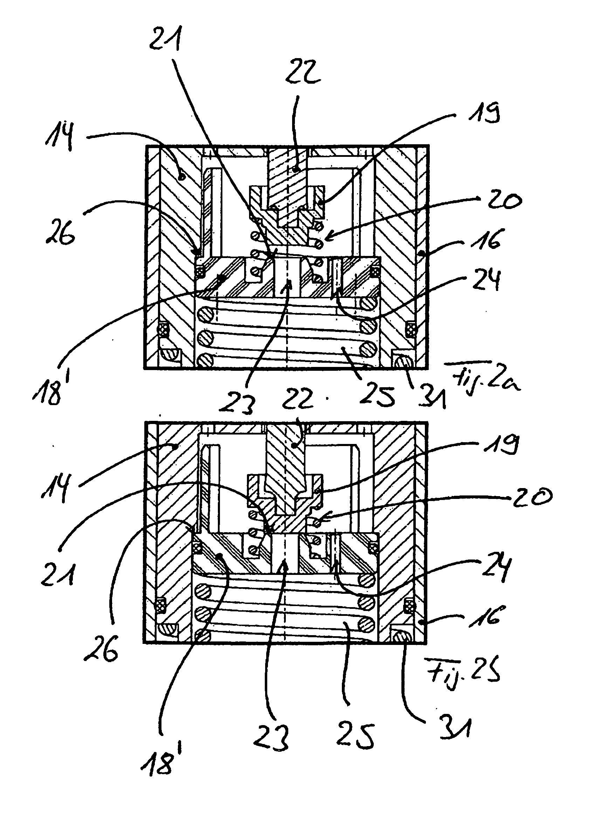

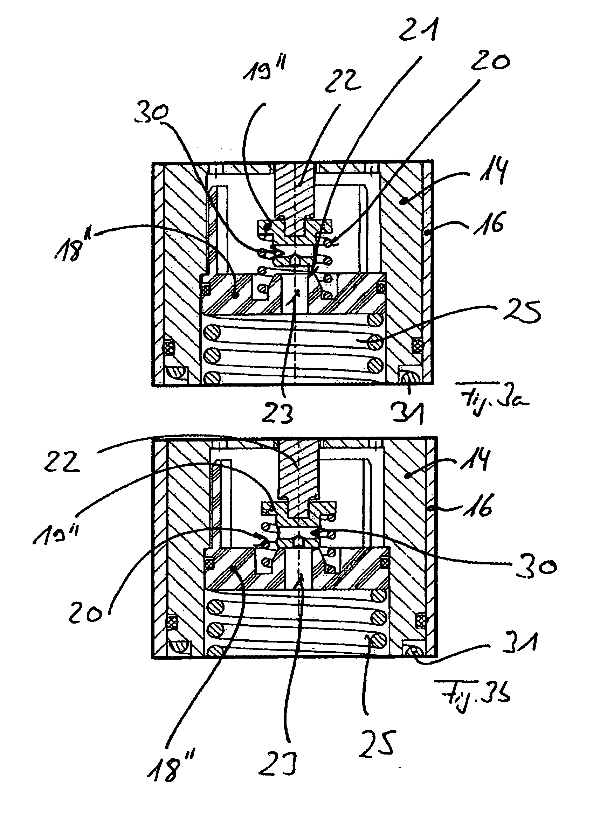

Figures 2a, 2b and Figures 3a, 3b each show details of alternative designs of the regulation valve 10 when no disinfection flow rate is needed.

In Figures 2a, 2b, the valve plunger 19 corresponds to the valve plunger 19 of Figures 1a to 1f. However, neither the valve body 18' alone nor the valve body 18' in combination with the valve housing 11 provides a disinfection opening. In Figure 3, the valve body 18' comprises only the openings 23 and 24 known from Figures 1a to 1f.

In Figures 2a and 2b, there is also no barrier element. The valve body 18' is pressed directly by the second spring element 25 against the stroke 26 provided by the valve housing 11, namely by the moveable part 14 of the valve housing 11.

In Figures 3a and 3b, a different valve plunger 19" and a different valve body 18" are used. The valve body 18" of Figures 3a and 3b comprises only the or each opening 23 known from Figures 1a to 1f. In Figures 3a and 3b, the or each relative large opening 23 is partially closed when said valve plunger 19" is pressed against said valve seat 21, whereby the relative low flow rate is provided by at least one opening 30 within the valve plunger 19" being in connection with the or each relative large opening 23 of the valve body 18" when the valve plunger 19" is pressed against said valve seat 21. The or each opening 30 is smaller than the or each opening 23 thereby providing the relative low flow rate of the liquid medium through the regulation valve.

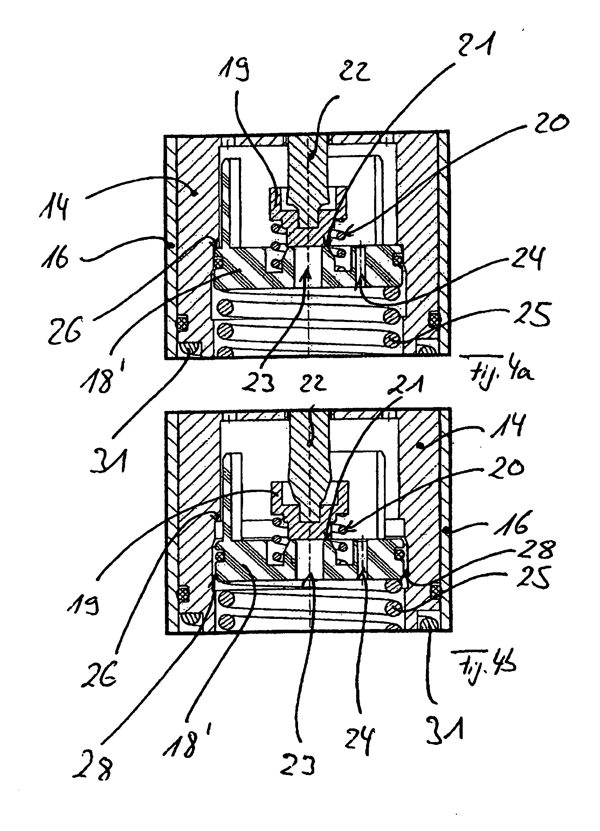

Figures 4a and 4b show details of an alternative design of the regulation valve 10 when disinfection flow rate is needed. In Figures 4a and 4b, the valve plunger 19' corresponds to the valve plunger 19' of Figures 1a to 1f and Figures 2a, 2b. The valve body 18' corresponds to the valve plunger 18' of Figures 2a, 2b. In Figures 4a and 4b, the or each disinfection opening 28 is provided by said valve body 18' in combination with the valve housing 11, namely by an outer shape of the valve body 18' in combination with an inner shape of the moveable part 14 of valve housing 11. The or each disinfection opening 28 is provided by a groove in the outer shape of the valve body 18' and/or by a groove in the inner shape of the moveable part 14 of valve housing 11.

The regulation valve 10 of Figures 1a to 1f further comprises a shut off element by which the flow of the liquid through the regulation valve 10 can be stopped. In the embodiment of Figures 1 a to 1f, said shut off element is provided by a third spring element 31, a stop member 32 and said moveable part 14 of the valve housing 11 being positioned inside said non moveable part 15 of the valve housing 11.

Said third spring element 31 provides a third spring force acting on the moveable part 14 of the valve housing 11. Said stop member 32 acts together with the moveable part 14 of the valve housing 11 and the third spring element 31 in such a way that in a first position of the stop member 32 (see Figure 1e, 1f) the third spring force provided by the third spring element 31 presses the moveable part 14 of the valve housing 11 against a stroke 33 provided by the non moveable part 15 of the valve housing 11 thereby stopping the flow of the liquid through the regulation valve10.

In a second position of the stop member 32 (see Figure 1d, 1a) the third spring force provided by the third spring element 31 presses the moveable part 14 of the valve housing 11 against the stop member 32 thereby allowing the flow of the liquid through the regulation valve 10.

In the embodiment of Figures 1a to 1f, said stop member 32 is provided by a screw screwed into the non moveable part 15 of the valve housing 11, namely in one of said plug portions 17. When the regulation valve 10 is opened (see Figure 1d, 1a), the screw 32 touches the moveable part 14 of the valve housing 11 and prevents that the moveable part 14 of the valve housing contacts the stroke 33 provided by the non moveable part 15 of the valve housing 11. In this case the liquid medium can flow through openings 34 in the moveable part 14 of the valve housing 11, namely from the first inlet sub-chamber 12a into the second inlet sub-chamber 12b. When the regulation valve 10 is closed (see Figure 1e, 1f), the moveable part 14 of the valve housing contacts the stroke 33 provided by the non moveable part 15. In this case the openings 34 in the moveable part 14 of the valve housing 11 are blocked and the liquid medium can not flow through said openings 34 from the first inlet sub-chamber 12a into the second inlet sub-chamber 12b.

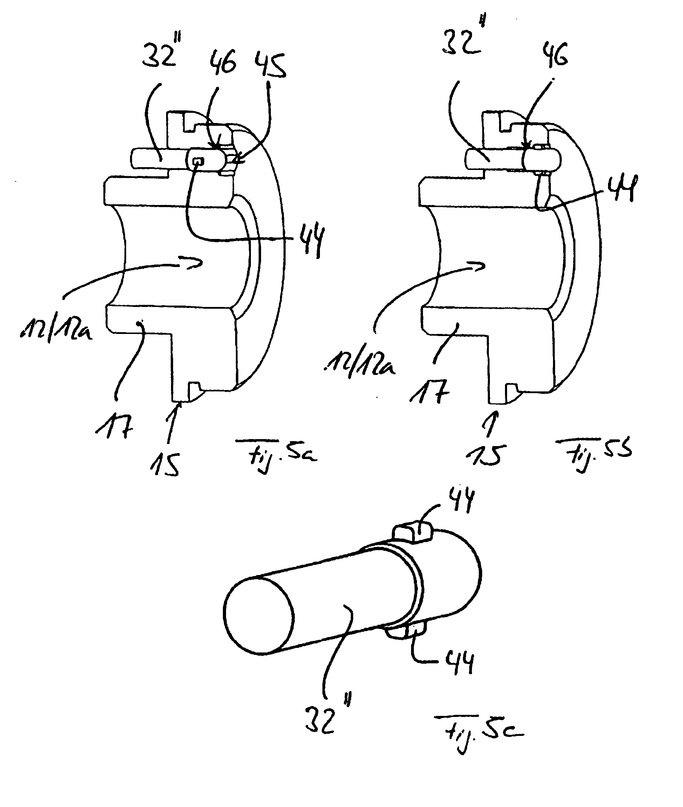

An alternative shut off element by which the flow of the liquid through the regulation valve 10 can be stopped is shown in Figures 5a to 5c, whereby in Figures 5a to 5c the stop member 32" is not provided by a screw but by a pin. Said pin has protrusions 44 acting together with recesses 45 and strokes 46 provided by the non moveable part 15 of the valve housing 11. Figure 5a shows the position of the same when the regulation valve is closed. Figure 5b shows the position of the same when the regulation valve is opened, whereby the pin has to be turned by about 90° between sais two positions.

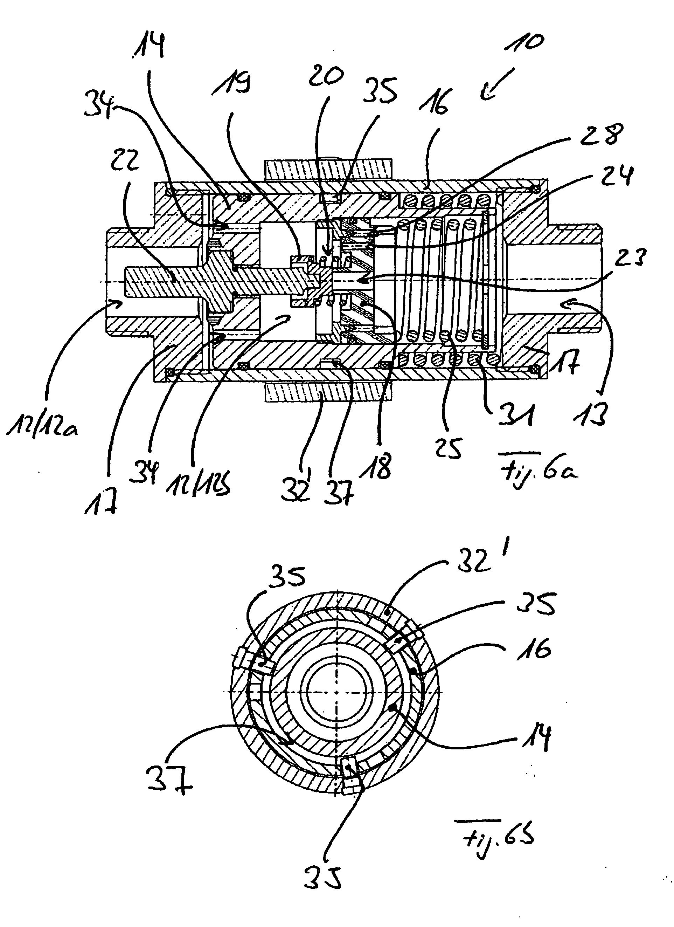

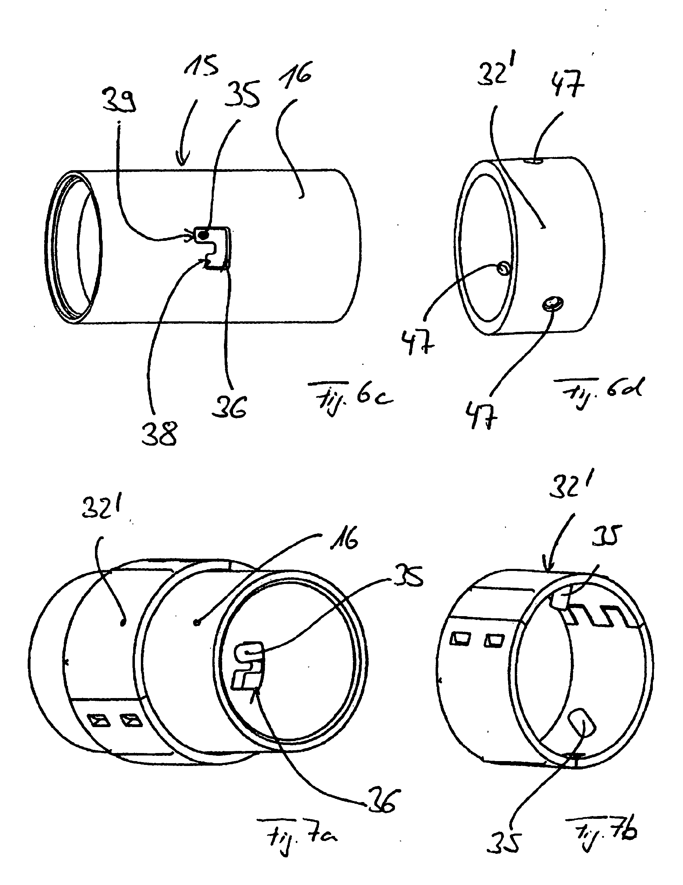

Another alternative shut off element by which the flow of the liquid through the regulation valve 10 can be stopped is shown in Figures 6a to 6d, whereby Fig. 6a shows a cross sectional view through a regulation valve 10 similar to the cross sectional view of Figure 1a. In the embodiment of Figures 6a to 6d, the shut off element is also provided by the third spring element 31, a stop member 32' and said moveable part 14 of the valve housing 11 being positioned inside said non moveable part 15 of the valve housing 11. The stop member 32' of Figures 6a to 6d provides the shut of function in the same way like the stop members 32, 32".

In the embodiment of Figures 6a to 6d, the stop member 32' is provided by a ring having at least one pin or protrusion 35, whereby the or each pin protrusion 35 of the ring 32' acts together with a groove 36 provided in the non moveable part 15 of the valve housing 11 and a groove 37 provided in the moveable part 14 of the valve housing 11.

When the regulation valve is opened, the or each pin 35 of the ring 32' enters into a shallow portion 38 of the respective groove 36 of the non moveable part 15 and into the groove 37 of the moveable part 14 thereby preventing that the moveable part 14 of the valve housing contacts the stroke 33 provided by the non moveable part 15 of the valve housing 11. In this case the liquid medium can flow through openings 34 in the moveable part 14 of the valve housing 11.

When the regulation valve is closed, the or each pin 35 of the ring 32' enters into a deep portion 39 of the respective groove 36 of the non moveable part 15 and into the groove 37 of the moveable part 14 thereby allowing that the moveable part 14 of the valve housing contacts the stroke 33 provided by the non moveable part 15 of the valve housing 11. In this case the liquid medium can not flow through openings 34 in the moveable part 14 of the valve housing 11.

In order to transfer the regulation valve 10 from it opened position in its closed position the stop member designed as a ring 32' is pressed against the third spring force provided by the third spring element 31 and the or each protrusion 35 of the ring 32' is moved out of the deep portion 39 of the respective groove 36 and moved into the shallow portion 38 of the same by rotating the ring 32' in a first circumferential direction. In order to transfer the regulation valve 10 from it closed position in its opened position the stop member designed as a ring 32' is also pressed against the third spring force provided by the third spring element 31 and the or each protrusion 35 of the ring 32' is moved out of the deep portion 39 of the respective groove 36 and moved into the shallow portion 38 of the same by rotating the ring 32' in an opposite second circumferential direction. The third spring force provided by the by the third spring element 31 presses the respective protrusion 35 always against the respective end section of the respective potion 38, 39 of the respective groove 36.

In Figures 6a to 6d the ring 32' is a metallic ring and the protrusion 35 are provided by screws guided in openings 47 of the metallic ring.

Figures 7a and 7b show an alternative in which the ring 32' is provided by a segmented, elastic plastic ring. The protrusions 35 are an integral part of the segments of the plastic ring.

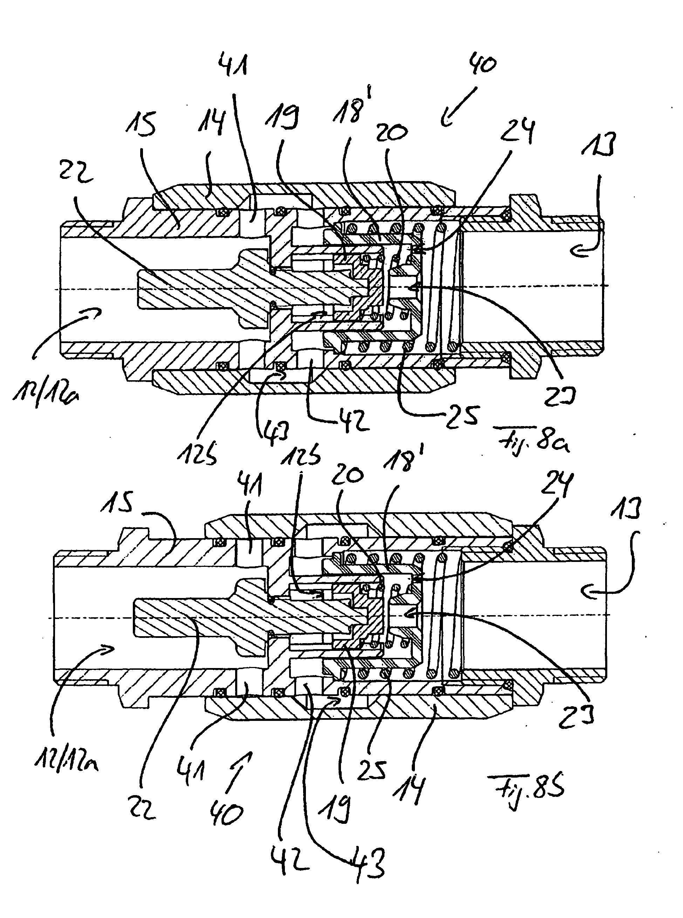

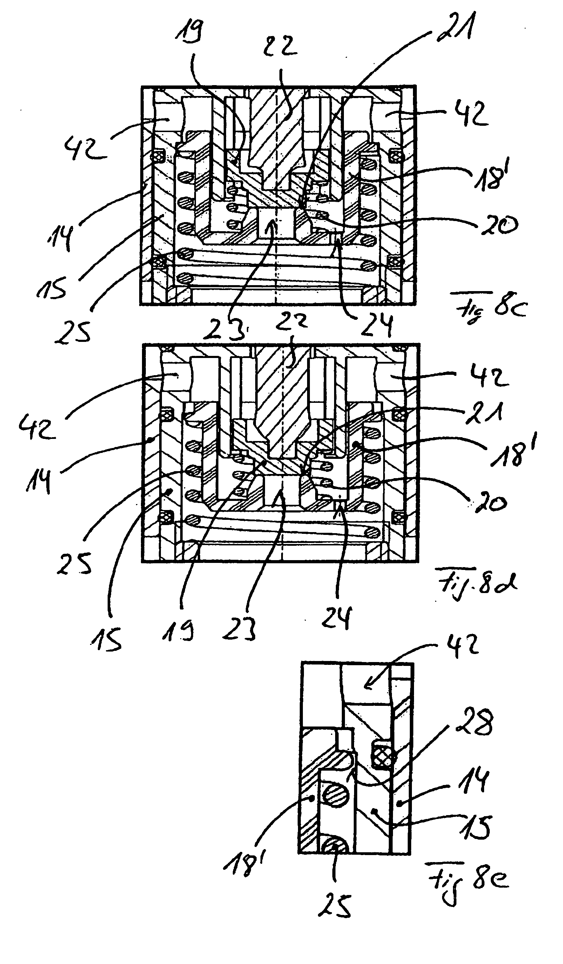

Figures 8a to 8d show views of a regulation valve 40 according to a second embodiment of the invention. Figure 8a shows the regulation valve 40 in an opened position and Figure 8b shows the same in a closed position. The regulation valve 40 of Figures 8a to 8d is similar to the regulation valve 10 of Figures 1a to 1f. For that, identical reference signs are used for identical parts. Only those details will be described for the regulation valve 40 of Figures 8a to 8d which are different from the regulation valve 10 of Figures 1 a to 1f.

The regulation valve 40 of Figures 8a to 8d comprises also a moveable part 14 and a non moveable part 15 of the valve housing 11, whereby the moveable part 14 of the valve housing 11 is positioned outside of the non moveable part 15 of the valve housing 11. The shut off element is provided by the moveable part 14 of the valve housing 11 being positioned outside a non moveable part 15 of the valve housing 11, whereby in a first position (see Figure 8b) of the moveable part 14 of the valve housing 11 the same is stopping the flow of the liquid through the regulation valve 40, and whereby in a second position (see Figure 8a) of the moveable part 14 of the valve housing 11 the same is allowing the flow of the liquid through the regulation valve 10.

The non moveable part 15 of the valve housing 11 comprises openings, namely openings 41 being in communication with the first inlet sub-chamber 12a of the regulation valve 40 and opening 42 being in communication with the second inlet sub-chamber 12b of the regulation valve 10, whereby in the opened position of the regulation valve 10 both openings 41, 42 are in communication with a recess 43 in the moveable part 14 of the valve housing 11 thereby allowing the flow of the liquid medium from the first inlet sub-chamber 12a into the second inlet sub-chamber 12b. In the closed position of the regulation valve 40 at least one of openings 41, 42 is not in communication with the recess 43 in the moveable part 14 of the valve housing 11 thereby stopping the flow of the liquid medium from the sub-chamber 12a into the inlet sub-chamber 12b.

As mentioned above, the regulation valve 40 of Figures 8a to 8d is similar to the regulation valve 10 of Figures 1a to 1f. The regulation valve 40 also provides the relative high flow rate, the relative low flow rate and the disinfection flow rate of the liquid medium at different temperatures of the same.

The valve plunger 19 of the regulation valve 40 of Figures 8a to 8d corresponds to the valve plunger 19 of Figures 1a to 1f, 2a and 2b, 4a and 4b. The valve body 18' of the regulation valve 40 of Figures 8a to 8d corresponds to the valve body 18' of Figures 2a and 2b, 4a and 4b having only the or each relative large opening 23 providing the relative high flow rate at relative low temperatures of the liquid medium and the or each relative small opening 24 providing the relative low flow rate at relative high temperatures of the liquid medium below the disinfection temperature threshold.

The or each disinfection opening 28 of regulation valve 40 of Figures 8a to 8d for providing the disinfection flow rate at relative high temperatures of the liquid medium below the disinfection temperature threshold corresponds to the or each disinfection opening 28 of Figures 4a and 4b being provided by an outer shape of the valve body 18' in combination with an inner shape of the non moveable part 15 of valve housing 11.

### List of reference signs

- 10: regulation valve
- 11: valve housing
- 12: valve inlet chamber
- 12a, 12b: valve inlet sub-chamber
- 13: valve outlet chamber
- 14: moveable part of valve housing
- 15: non moveable part of valve housing
- 16: tube portion
- 17: plug portion
- 18, 18', 18": valve body
- 19, 19": valve plunger
- 20: first spring element
- 21: valve seat
- 22: thermo element
- 23: relative large opening within the valve body
- 24: relative small opening within the valve body
- 25: second spring element
- 26: stroke
- 27: barrier element
- 28: disinfection opening
- 29: pin of barrier element
- 30: opening within the valve plunger
- 31: third spring element
- 32, 32', 32": stop member
- 33: stroke
- 34: opening within moveable part of valve housing
- 35: protrusion
- 36: groove in non moveable part of valve housing
- 37: groove in moveable part of valve housing
- 38: shallow portion of groove non moveable part of valve housing
- 39: deep portion of groove non moveable part of valve housing
- 40: regulation valve
- 41: opening within non moveable part of valve housing
- 42: opening within non moveable part of valve housing
- 43: recess within moveable part of valve housing
- 44: protrusion
- 45: recess
- 46: stroke
- 47: opening

## Claims

1. Regulation valve (10) for a liquid medium like water, especially for drinking water, comprising:
a valve housing (11) providing a valve inlet chamber (12) and a valve outlet chamber (13);
a valve insert being positioned within said valve housing (11), said valve insert comprising a valve body (18, 18', 18"), a valve plunger (19, 19") and a first spring element (20) being positioned between the valve body (18, 18', 18") and the valve plunger (19, 19"), whereby said valve body (18, 18', 18") provides a valve seat (21) for said valve plunger (19, 19") and whereby said first spring element (20) provides a first spring force which tends to lift up said valve plunger (19, 19") from said valve seat (21);
a thermo element (22) being positioned directly in the flow of the liquid medium, said thermo element (22) provides a thermo element force acting on the valve plunger (19, 19") depending on the temperature of the liquid medium within the valve housing (11), whereby said thermo element force provided by said thermo element (22) is acting against the first spring force provided by said first spring element and thereby tends to press said valve plunger (19, 19") against said valve seat (21); whereby
said valve body (18, 18', 18") provides at least one relative large opening (23) which is opened when said valve plunger (19, 19") is lifted up from said valve seat (21) at relative low temperatures of the liquid medium thereby providing a relative high flow rate, **characterized in that** said at least one relative large opening (23) is at least partially closed when said valve plunger (19, 19") is pressed against said valve seat (21) at relative high temperatures of the liquid medium thereby providing a relative low flow rate; and the regulation valve (10) includes a shut off element by which the flow of the liquid through the regulation valve (10) can be stopped.

2. Regulation valve (10) as claimed in claim 1, **characterized in that** said thermo element force provided by said thermo element (22) increases when the temperature of the liquid medium within the valve housing (11) increases.

3. Regulation valve (10) as claimed in claim 1 or 2, **characterized in that** said thermo element (22) acts together with the valve plunger (19, 19") and the first spring element (20) in such a way that at relative low temperatures of the liquid medium the valve plunger (19, 19") is lifted up from the valve seat (21) by the first spring force being larger than the thermo element force thereby providing the relative high flow rate of the liquid medium through the regulation valve (10), and that at relative high temperatures of the liquid medium the valve plunger (19, 19") is pressed against the valve seat (21) by the thermo element force being larger than the first spring force thereby providing the relative low flow rate of the liquid medium through the regulation valve (10).

4. Regulation valve (10) as daimed in one of claims 1 to 3, **characterized in that** a second spring element (25) is acting together with to the valve body (18, 18', 18") providing a second spring force which tends press the valve body (18, 18', 18") in the direction of a stroke (26) provided by the said valve housing (11).

5. Regulation valve (10) as claimed in claim 4, **characterized in that** when the valve plunger (19, 19") is pressed against the valve seat (21) provided by said valve body (18, 18', 18") said thermo element force provided by said thermo element (22) is also acting against the second spring force provided by said second spring element and thereby tends to lift up the valve body from said stroke.

6. Regulation valve (10) as claimed in claim 4 or 5, **characterized in that** when at relative high temperatures of the liquid medium the temperature of the liquid medium is below a disinfection temperature threshold, the thermo element force provided by said thermo element (22) is below the second spring force provided by said second spring element (25) so that said valve plunger (19, 19") is pressed against said valve seat (21) and that said valve body (18, 18', 18") is pressed in the direction of said stroke (26) thereby providing said relative low flow rate of the liquid medium through the regulation valve (10), and that when at relative high temperatures of the liquid medium the temperature of the liquid medium is above the disinfection temperature threshold, the thermo element force provided by said thermo element (22) is above the second spring force provided by said second spring element (25) so that said valve body (18, 18', 18") is lifted up from said stroke (26) thereby providing a disinfection flow rate of the liquid medium through the regulation valve (10) being higher than said relative low flow rate.

7. Regulation valve (10) as claimed in one of claims 1 to 6, **characterized in that** the or each relative large opening (23) is completely closed when said valve plunger (19) is pressed against said valve seat (21), whereby the relative low flow rate is provided by at least one additional, relative small opening (24) within the valve body (18, 18').

8. Regulation valve (10) as claimed in one of claims 1 to 6, **characterized in that** the or each relative large opening (23) is partially closed when said valve plunger (19") is pressed against said valve seat (21), whereby the relative low flow rate is provided by at least one opening (30) within the valve plunger (19") being in connection with the or each relative large opening (23) of the valve body.

9. Regulation valve (10) as claimed in one of claims 1 to 8, **characterized in that** said valve body (18) alone or the valve body (18', 18") in combination with the valve housing (11) provides at least one disinfection opening (28) which is closed when at relative high temperatures of the liquid medium the temperature of the liquid medium is below the disinfection temperature threshold and which is opened when at relative high temperatures of the liquid medium the temperature of the liquid medium is above the disinfection temperature threshold.

10. Regulation valve (10) as claimed in claim 9, **characterized in that** the or each disinfection opening (28) is provided by said valve body alone, whereby the or each disinfection opening (28) is closed by a respective protrusion (29) provided by a barrier element (27) when the temperature of the liquid medium is below the disinfection temperature threshold and whereby the or each disinfection opening is opened by the respective protrusion when the temperature of the liquid medium is above the disinfection temperature threshold.

11. Regulation valve (10) as claimed in claim 9, **characterized in that** the or each disinfection opening (28) is provided by said valve body in combination with the valve housing, namely by an outer shape of the valve body (18', 18") and an inner shape of the valve housing (11).

12. Regulation valve (10) as claimed in one of claims 1 to 11, **characterized in that** said shut off element is provided by a third spring element (31), a stop member (32, 32', 32") and a moveable part (14) of the valve housing being positioned inside a non moveable part (15) of the valve housing (11), whereby said third spring element (31) provides a third spring force acting on the moveable part (14) of the valve housing (11), whereby said stop member (32, 32', 32") acts together with the moveable part (14) of the valve housing (11) and the third spring element (31) in such a way that in a first position of the stop member (32, 32', 32") the third spring force provided by the third spring element (31) presses the moveable part (14) of the valve housing (11) against a stroke (33) provided by the non moveable part (15) of the valve housing (11) thereby stopping the flow of the liquid through the regulation valve (10), and that in a second position of the stop member (32, 32', 32") the third spring force provided by the third spring element (31) presses the moveable part (14) of the valve housing (11) against the stop member (32) thereby allowing the flow of the liquid through the regulation valve (10).

13. Regulation valve (10) as claimed in one of claims 1 to 11, **characterized in that** said shut off element is provided by the moveable part (14) of the valve housing being positioned outside a non moveable part (15) of the valve housing (11), whereby in a first position of the moveable part (14) of the valve housing the same is stopping the flow of the liquid through the regulation valve (10), and whereby in a second position of the moveable part (14) of the valve housing the same is allowing the flow of the liquid through the regulation valve (10).

## Patentansprüche

1. Regelventil (10) für ein flüssiges Medium wie Wasser, insbesondere für Trinkwasser, wobei das Ventil Folgendes umfasst:
ein Ventilgehäuse (11), das eine Ventileinlasskammer (12) und eine Ventilauslasskammer (13) bereitstellt;
einen Ventileinsatz, der innerhalb des Ventilgehäuses (11) positioniert ist, wobei der Ventileinsatz einen Ventilkörper (18, 18', 18"), einen Ventilstößel (19, 19") und ein erstes Federelement (20) umfasst, das zwischen dem Ventilkörper (18, 18', 18") und dem Ventilstößel (19, 19") positioniert ist, wobei der Ventilkörper (18, 18', 18") einen Ventilsitz (21) für den Ventilstößel (19, 19") bereitstellt, und wobei das erste Federelement (20) eine erste Federkraft bereitstellt, die dazu tendiert, den Ventilstößel (19, 19") von dem Ventilsitz (21) abzuheben;
ein Thermoelement (22), das direkt im Strom des flüssigen Mediums positioniert ist, wobei das Thermoelement (22) eine Thermoelementkraft bereitstellt, die, abhängig von der Temperatur des flüssigen Mediums im Ventilgehäuse (11), auf den Ventilstößel (19, 19") einwirkt, wobei die vom Thermoelement (22) bereitgestellte Thermoelementkraft gegen die vom ersten Federelement bereitgestellte erste Federkraft wirkt und dadurch dazu tendiert, den Ventilstößel (19, 19") gegen den Ventilsitz (21) zu drücken; wobei
der Ventilkörper (18, 18', 18") mindestens eine relativ große Öffnung (23) bereitstellt, die geöffnet ist, wenn der Ventilstößel (19, 19") bei relativ niedrigen Temperaturen des flüssigen Mediums von dem Ventilsitz (21) abgehoben ist, wodurch eine relativ hohe Strömungsrate bereitgestellt wird, **dadurch gekennzeichnet, dass** die mindestens eine relativ große Öffnung (23) mindestens teilweise geschlossen ist, wenn der Ventilstößel (19, 19") bei relativ hohen Temperaturen des flüssigen Mediums gegen den Ventilsitz (21) gedrückt ist, wodurch eine relativ niedrige Strömungsrate bereitgestellt wird, und dass das Regelventil (10) ein Absperrelement beinhaltet, mit dem der Strom der Flüssigkeit durch das Regelventil (10) gestoppt werden kann.

2. Regelventil (10) nach Anspruch 1, **dadurch gekennzeichnet, dass** die vom Thermoelement (22) bereitgestellte Thermoelementkraft zunimmt, wenn die Temperatur des flüssigen Mediums innerhalb des Ventilgehäuses (11) ansteigt.

3. Regelventil (10) nach Anspruch 1 oder 2, **dadurch gekennzeichnet, dass** das Thermoelement (22) mit dem Ventilstößel (19, 19") und dem ersten Federelement (20) in einer solchen Weise zusammenwirkt, dass der Ventilstößel (19, 19"), bei relativ niedrigen Temperaturen des flüssigen Mediums, durch die erste Federkraft von dem Ventilsitz (21) abgehoben ist, die größer als die Thermoelementkraft ist, wodurch die relativ hohe Strömungsrate des flüssigen Mediums durch das Regelventil (10) bereitgestellt wird, und dass der Ventilstößel (19, 19"), bei relativ hohen Temperaturen des flüssigen Mediums, durch die Thermoelementkraft, die größer als die erste Federkraft ist, gegen den Ventilsitz (21) gedrückt ist, wodurch die relativ niedrige Strömungsrate des flüssigen Mediums durch das Regelventil (10) bereitgestellt wird.

4. Regelventil (10) nach einem der Ansprüche 1 bis 3, **dadurch gekennzeichnet, dass** ein zweites Federelement (25) mit dem Ventilkörper (18, 18', 18") zusammenwirkt, wobei eine zweite Federkraft bereitgestellt wird, die dazu tendiert, den Ventilkörper (18, 18', 18") in die Richtung eines durch das Ventilgehäuse (11) bereitgestellten Anschlags (26) zu drücken.

5. Regelventil (10) nach Anspruch 4, **dadurch gekennzeichnet, dass**, wenn der Ventilstößel (19, 19") gegen den vom Ventilkörper (18, 18', 18") bereitgestellten Ventilsitz (21) gedrückt ist, die vom Thermoelement (22) bereitgestellte Thermoelementkraft auch gegen die vom zweiten Federelement bereitgestellte zweite Federkraft wirkt und dadurch dazu tendiert, den Ventilkörper von dem Anschlag abzuheben.

6. Regelventil (10) nach Anspruch 4 oder 5, **dadurch gekennzeichnet, dass**, wenn, bei relativ hohen Temperaturen des flüssigen Mediums, die Temperatur des flüssigen Mediums unter einer Desinfektionstemperaturschwelle liegt, die vom Thermoelement (22) bereitgestellte Thermoelementkraft unter der vom zweiten Federelement (25) bereitgestellten zweiten Federkraft liegt, so dass der Ventilstößel (19, 19") gegen den Ventilsitz (21) gedrückt und der Ventilkörper (18, 18', 18") in die Richtung des Anschlags (26) gedrückt ist, wodurch die relativ niedrige Strömungsrate des flüssigen Mediums durch das Regelventil (10) bereitgestellt wird, und dass, wenn, bei relativ hohen Temperaturen des flüssigen Mediums, die Temperatur des flüssigen Mediums über der Desinfektionstemperaturschwelle liegt, die vom Thermoelement (22) bereitgestellte Thermoelementkraft über der vom zweiten Federelement (25) bereitgestellten zweiten Federkraft liegt, so dass der Ventilkörper (18, 18', 18") von dem Anschlag (26) abgehoben ist, wodurch eine Desinfektionsströmungsrate des flüssigen Mediums durch das Regelventil (10) bereitgestellt wird, die höher als die relativ niedrige Strömungsrate ist.

7. Regelventil (10) nach einem der Ansprüche 1 bis 6, **dadurch gekennzeichnet, dass** die oder jede relativ große Öffnung (23) vollständig geschlossen ist, wenn der Ventilstößel (19) gegen den Ventilsitz (21) gedrückt ist, wobei die relativ niedrige Strömungsrate durch mindestens eine zusätzliche, relativ kleine Öffnung (24) innerhalb des Ventilkörpers (18, 18') bereitgestellt wird.

8. Regelventil (10) nach einem der Ansprüche 1 bis 6, **dadurch gekennzeichnet, dass** die oder jede relativ große Öffnung (23) teilweise geschlossen ist, wenn der Ventilstößel (19") gegen den Ventilsitz (21) gedrückt ist, wobei die relativ niedrige Strömungsrate durch mindestens eine Öffnung (30) innerhalb des Ventilstößels (19") bereitgestellt wird, die mit der oder jeder relativ großen Öffnung (23) des Ventilkörpers in Verbindung steht.

9. Regelventil (10) nach einem der Ansprüche 1 bis 8, **dadurch gekennzeichnet, dass** der Ventilkörper (18) allein oder der Ventilkörper (18', 18") in Kombination mit dem Ventilgehäuse (11) mindestens eine Desinfektionsöffnung (28) bereitstellt, die geschlossen ist, wenn, bei relativ hohen Temperaturen des flüssigen Mediums, die Temperatur des flüssigen Mediums unter der Desinfektionstemperaturschwelle liegt, und die geöffnet ist, wenn, bei relativ hohen Temperaturen des flüssigen Mediums, die Temperatur des flüssigen Mediums über der Desinfektionstemperaturschwelle liegt.

10. Regelventil (10) nach Anspruch 9, **dadurch gekennzeichnet, dass** die oder jede Desinfektionsöffnung (28) allein durch den Ventilkörper bereitgestellt wird, wobei die oder jede Desinfektionsöffnung (28) durch einen jeweiligen Vorsprung (29), der in Form eines Barriereelements (27) vorgesehen ist, geschlossen ist, wenn die Temperatur des flüssigen Mediums unter der Desinfektionstemperaturschwelle liegt, und wobei die oder jede Desinfektionsöffnung durch den jeweiligen Vorsprung geöffnet ist, wenn die Temperatur des flüssigen Mediums über der Desinfektionstemperaturschwelle liegt.

11. Regelventil (10) nach Anspruch 9, **dadurch gekennzeichnet, dass** die oder jede Desinfektionsöffnung (28) durch den Ventilkörper in Kombination mit dem Ventilgehäuse, nämlich durch eine äußere Form des Ventilkörpers (18', 18") und eine innere Form des Ventilgehäuses (11), bereitgestellt wird.

12. Regelventil (10) nach einem der Ansprüche 1 bis 11, **dadurch gekennzeichnet, dass** das Absperrelement durch ein drittes Federelement (31) bereitgestellt wird, wobei ein Anschlagelement (32, 32', 32") und ein bewegliches Teil (14) des Ventilgehäuses im Inneren eines nichtbeweglichen Teils (15) des Ventilgehäuses (11) positioniert sind, wobei das dritte Federelement (31) eine dritte Federkraft bereitstellt, die auf das bewegliche Teil (14) des Ventilgehäuses (11) einwirkt, wobei das Anschlagelement (32, 32', 32") mit dem beweglichen Teil (14) des Ventilgehäuses (11) und dem dritten Federelement (31) in einer solchen Weise zusammenwirkt, dass, in einer ersten Position des Anschlagelements (32, 32', 32"), die dritte Federkraft, die durch das dritte Federelement (31) bereitgestellt wird, das bewegliche Teil (14) des Ventilgehäuses (11) gegen einen Hub (33) drückt, der durch das nichtbewegliche Teil (15) des Ventilgehäuses (11) bereitgestellt wird, wodurch der Strom der Flüssigkeit durch das Regelventil (10) gestoppt wird, und dass, in einer zweiten Position des Anschlagelements (32, 32', 32"), die dritte Federkraft, die durch das dritte Federelement (31) bereitgestellt wird, das bewegliche Teil (14) des Ventilgehäuses (11) gegen das Anschlagelement (32) drückt, so dass der Strom der Flüssigkeit durch das Regelventil (10) strömen kann.

13. Regelventil (10) nach einem der Ansprüche 1 bis 11, **dadurch gekennzeichnet, dass** das Absperrelement dadurch bereitgestellt wird, dass das bewegliche Teil (14) des Ventilgehäuses außerhalb eines nichtbeweglichen Teils (15) des Ventilgehäuses (11) positioniert ist, wobei, in einer ersten Position des beweglichen Teils (14) des Ventilgehäuses, das Element den Strom der Flüssigkeit durch das Regelventil (10) stoppt, und wobei, in einer zweiten Position des beweglichen Teils (14) des Ventilgehäuses, das Element es ermöglicht, dass der Strom der Flüssigkeit durch das Regelventil (10) strömt.

## Revendications

1. Soupape de régulation (10) pour un milieu liquide tel que l'eau, en particulier pour de l'eau potable, comprenant :
un boîtier de soupape (11) fournissant une chambre d'entrée de soupape (12) et une chambre de sortie de soupape (13) ;
un insert de soupape étant positionné à l'intérieur dudit boîtier de soupape (11), ledit insert de soupape comprenant un corps de soupape (18, 18', 18'), un plongeur de soupape (19, 19") et un premier élément ressort (20) positionné entre le corps de soupape (18, 18', 18") et le plongeur de soupape (19, 19"), ledit corps de soupape (18, 18', 18") fournissant un siège de soupape (21) pour ledit plongeur de soupape (19, 19") et ledit premier élément ressort (20) produisant une première force de ressort qui a tendance à soulever ledit plongeur de soupape (19, 19") dudit siège de soupape (21) ;
un thermo-élément (22) étant positionné directement dans l'écoulement du milieu liquide, ledit thermo-élément (22) produisant une force de thermo-élément agissant sur le plongeur de soupape (19, 19") dépendant de la température du milieu liquide à l'intérieur du boîtier de soupape (11), ladite force de thermo-élément produite par ledit thermo-élément (22) agissant à l'encontre de la première force de ressort produite par ledit premier élément ressort et ayant ainsi tendance à presser ledit plongeur de soupape (19, 19") contre ledit siège de soupape (21) ;
ledit corps de soupape (18, 18', 18") fournissant au moins une ouverture (23) relativement grande qui est ouverte lorsque ledit plongeur de soupape (19, 19") est soulevé dudit siège de soupape (21) à des températures relativement faibles du milieu liquide, produisant ainsi le débit relativement élevé, **caractérisée en ce que** ladite au moins une ouverture (23) relativement grande est au moins partiellement fermée lorsque ledit plongeur de soupape (19, 19") est pressé contre ledit siège de soupape (21) à des températures relativement élevées du milieu liquide, produisant ainsi le débit relativement faible ; et la soupape de régulation (10) comporte un élément d'obturation au moyen duquel l'écoulement du liquide à travers la soupape de régulation (10) peut être arrêté.

2. Soupape de régulation (10) selon la revendication 1, **caractérisée en ce que** ladite force de thermo-élément produite par ledit thermo-élément (22) augmente lorsque la température du milieu liquide à l'intérieur du boîtier de soupape (11) augmente.

3. Soupape de régulation (10) selon la revendication 1 ou 2, **caractérisée en ce que** ledit thermo-élément (22) coopère avec le plongeur de soupape (19, 19") et le premier élément ressort (20) d'une manière telle qu'à des températures relativement faibles du milieu liquide, le plongeur de soupape (19, 19") est soulevé du siège de soupape (21) du fait que la première force de ressort est supérieure à la force de thermo-élément, produisant ainsi un débit relativement élevé du milieu liquide à travers la soupape de régulation (10) ; et qu'à des températures relativement élevées du milieu liquide, le plongeur de soupape (19, 19") est pressé contre le siège de soupape (21) du fait que la force de thermo-élément est supérieure à la première force de ressort, produisant ainsi un débit relativement faible du milieu liquide à travers la soupape de régulation (10).

4. Soupape de régulation (10) selon l'une des revendications 1 à 3, **caractérisée en ce qu'**un deuxième élément ressort (25) coopère avec le corps de soupape (18, 18', 18"), produisant une deuxième force de ressort qui a tendance à presser le corps de soupape (18, 18', 18") dans la direction d'un épaulement (26) fourni par ledit boîtier de soupape (11).

5. Soupape de régulation (10) selon la revendication 4, **caractérisée en ce que**, lorsque le plongeur de soupape (19, 19") est pressé contre le siège de soupape (21) fourni par ledit corps de soupape (18, 18', 18"), ladite force de thermo-élément produite par ledit thermo-élément (22) agit également à l'encontre de la deuxième force de ressort produite par ledit deuxième élément ressort et a ainsi tendance à soulever le corps de soupape dudit épaulement.

6. Soupape de régulation (10) selon la revendication 4 ou 5, **caractérisée en ce que**, lorsque la température du milieu liquide est inférieure à un seuil de température de désinfection à des températures relativement élevées du milieu liquide, la force de thermo-élément produite par ledit thermo-élément (22) est inférieure à la deuxième force de ressort produite par ledit deuxième élément ressort (25), de sorte que ledit plongeur de soupape (19, 19") est pressé contre ledit siège de soupape (21) et que ledit corps de soupape (18, 18', 18") est pressé dans la direction dudit épaulement (26), produisant ainsi ledit débit relativement faible du milieu liquide à travers la soupape de régulation (10) ; et **en ce que**, lorsque la température du milieu liquide est supérieure au seuil de température de désinfection à des températures relativement élevées du milieu liquide, la force de thermo-élément produite par ledit thermo-élément (22) est supérieure à la deuxième force de ressort produite par ledit deuxième élément ressort (25), de sorte que ledit corps de soupape (18, 18', 18" ) est soulevé dudit épaulement (26), produisant ainsi un débit de désinfection du milieu liquide à travers la soupape de régulation (10) qui est supérieur audit débit relativement faible.

7. Soupape de régulation (10) selon l'une des revendications 1 à 6, **caractérisée en ce que** la ou chaque ouverture (23) relativement grande est complètement fermée lorsque ledit plongeur de soupape (19) est pressé contre ledit siège de soupape (21), le débit relativement faible étant produit par au moins une ouverture (24) supplémentaire relativement petite à l'intérieur du corps de soupape (18, 18').

8. Soupape de régulation (10) selon l'une des revendications 1 à 6, **caractérisée en ce que** la ou chaque ouverture (23) relativement grande est partiellement fermée lorsque ledit plongeur de soupape (19") est pressé contre ledit siège de soupape (21), le débit relativement faible étant produit par au moins une ouverture (30) à l'intérieur du plongeur de soupape (19") en liaison avec la ou chaque ouverture (23) relativement grande du corps de soupape.

9. Soupape de régulation (10) selon l'une des revendications 1 à 8, **caractérisée en ce que** ledit corps de soupape (18) seul ou le corps de soupape (18', 18") en association avec le boîtier de soupape (11) fournit au moins une ouverture de désinfection (28) qui est fermée lorsqu'à des températures relativement élevées du milieu liquide la température du milieu liquide est inférieure au seuil de température de désinfection et qui est ouverte lorsqu'à des températures relativement élevées du milieu liquide la température du milieu liquide est supérieure au seuil de température de désinfection.

10. Soupape de régulation (10) selon la revendication 9, **caractérisée en ce que** la ou chaque ouverture de désinfection (28) est fournie par ledit corps de soupape seul, la ou chaque ouverture de désinfection (28) étant fermée par une saillie respective (29) fournie par un élément formant barrière (27) lorsque la température du milieu liquide est inférieure au seuil de température de désinfection, et la ou chaque ouverture de désinfection étant ouverte par la saillie respective lorsque la température du milieu liquide est supérieure au seuil de température de désinfection.

11. Soupape de régulation (10) selon la revendication 9, **caractérisée en ce que** la ou chaque ouverture de désinfection (28) est fournie par ledit corps de soupape en association avec le boîtier de soupape, c'est-à-dire par une forme extérieure du corps de soupape (18', 18") et une forme intérieure du boîtier de soupape (11).

12. Soupape de régulation (10) selon l'une des revendications 1 à 11, **caractérisée en ce que** ledit élément d'obturation est fourni par un troisième élément ressort (31), un élément de butée (32, 32', 32") et une partie mobile (14) du boîtier de soupape positionnée à l'intérieur d'une partie non mobile (15) du boîtier de soupape (11), ledit troisième élément ressort (31) produisant une troisième force de ressort agissant sur la partie mobile (14) du boîtier de soupape (11), ledit élément de butée (32, 32', 32") coopérant avec la partie mobile (14) du boîtier de soupape (11) et le troisième élément ressort (31) d'une manière telle qu'à une première position de l'élément de butée (32, 32', 32") la troisième force de ressort produite par le troisième élément ressort (31) presse la partie mobile (14) du boîtier de soupape (11) contre un épaulement (33) fourni par la partie non mobile (15) du boîtier de soupape (11), arrêtant ainsi l'écoulement du liquide à travers la soupape de régulation (10), et qu'à une deuxième position de l'élément de butée (32, 32', 32") la troisième force de ressort produite par le troisième élément ressort (31) presse la partie mobile (14) du boîtier de soupape (11) contre l'élément de butée (32), permettant ainsi au liquide de s'écouler à travers la soupape de régulation (10).

13. Soupape de régulation (10) selon l'une des revendications 1 à 11, **caractérisée en ce que** ledit élément d'obturation est fourni par la partie mobile (14) du boîtier de soupape positionnée à l'extérieur d'une partie non mobile (15) du boîtier de soupape (11) et, à une première position de la partie mobile (14) du boîtier de soupape, cette dernière arrêtant l'écoulement du liquide à travers la soupape de régulation (10) et, à une deuxième position de la partie mobile (14) du boîtier de soupape, cette dernière permettant l'écoulement du liquide à travers la soupape de régulation (10).
